# EUROPEAN PATENT APPLICATION

(11) **EP 4 675 443 A1**
(43) Date of publication of application: **07.01.2026**
(21) Application number: 24774003.8
(22) Date of filing: 14.03.2024
(51) Int. Cl.: G06F 13/16

(54) **BUFFER, CONTROL METHOD THEREFOR AND COMPUTER SYSTEM**

(30) Priority: 21.03.2023 CN 202310311769
(71) Applicant: Huawei Technologies Co., Ltd., Shenzhen, Guangdong 518129 (CN)
(72) Inventor: SONG, Kangding, Shenzhen, Guangdong 518129 (CN); ZHANG, Zhiqiang, Shenzhen, Guangdong 518129 (CN); GAO, Xian, Shenzhen, Guangdong 518129 (CN)
(74) Representative: Epping - Hermann - Fischer
(86) International application number: PCT/CN2024/081735
(87) International publication number: WO 2024/193437

(57) **Abstract**

Embodiments of this application provide a cache, a control method therefor, and a computer system, and relate to the field of storage technologies, to improve memory access efficiency of the computer system. The cache is connected to a memory controller, and the cache includes a plurality of cache lines. The control method for a cache includes: storing write data of a received write command into cache lines, and before the cache lines are allocated to new memory addresses, sending dirty data stored in the cache lines to the memory controller.

## Description

This application claims priority to Chinese Patent Application No. 202310311769.4, filed with the China National Intellectual Property Administration on March 21, 2023 and entitled "CACHE AND CONTROL METHOD THEREFOR, AND COMPUTER SYSTEM", which is incorporated herein by reference in its entirety.

### TECHNICAL FIELD

Embodiments of this application relate to the field of storage technologies, and specifically, to a cache and a control method therefor, and a computer system.

### BACKGROUND

A memory controller is responsible for scheduling and executing read and write commands used by a processor to access a memory. For the read command and the write command, the processor usually needs to perform further processing on an execution result of the read command, that is, read data. If an execution speed for the read command is slow, a data access speed is slow, which reduces running efficiency of the processor. The write command only needs to write data into the memory, and a write result has small impact on running of the processor. Therefore, a delay of the read command is more easily sensed than a delay of the write command.

In consideration of frequency and delay, the memory controller has a small depth of an internal queue and a small cache capability. If only the memory controller performs read/write scheduling, a quantity of read/write switching times is large, and overheads for read/write switching greatly affect performance. Consequently, memory access efficiency is reduced.

### SUMMARY

Embodiments of this application provide a cache and a control method therefor, and a computer system, to improve memory access efficiency of the computer system.

To achieve the foregoing objective, the following technical solutions are used in this application.

According to a first aspect, an embodiment of this application provides a control method for a cache. The cache is connected to a memory controller, and the cache includes a plurality of cache lines. The method includes: storing write data of a received write command into the cache lines; and before the cache lines are allocated to new memory addresses, sending dirty data stored in the cache lines to the memory controller, where the dirty data refers to the write data to be written into a memory.

According to the control method for a cache provided in embodiments of this application, the cache may cache the write data of the write command, so that a capability of the memory controller to cache the command can be enhanced, and the memory controller has a scheduling capability for the cached write data of the write command. To be specific, before the cache lines are allocated to the new memory addresses, the dirty data is actively sent to the memory controller, instead of being passively sent to the memory controller after the cache lines are allocated to the new memory addresses. Because scheduling of the memory controller on a read/write command is limited, when the cache passively sends the dirty data to the memory controller, a sending occasion is not controlled, which may likely lead to more read/write switching times when the memory controller schedules the read/write command. Consequently, memory access efficiency is reduced. According to the control method provided in embodiments of this application, before the cache lines are allocated to the new memory addresses, the cache may actively select an occasion to send the cached dirty data to the memory controller and written into the memory. In this way, a scheduling manner with high memory access efficiency or a manner with a short read delay can be selected. For example, when there are a small quantity of read commands in a read queue, the dirty data is sent to the memory controller and written into the memory. However, if the dirty data is passively sent to the memory controller, the occasion is uncontrollable, and consequently, when the dirty data that is passively sent to the memory controller is written into the memory, it is highly likely that execution of the read command in the read queue is affected. Therefore, in the solution provided in embodiments of this application, before the cache lines are allocated to the new memory addresses, an appropriate occasion may be selected to actively send the dirty data to the memory controller. This can reduce impact on execution of the read command, thereby helping the memory controller improve efficiency of scheduling the read/write command, reduce a quantity of read/write switching times, and improve the memory access efficiency.

In a possible implementation, before the cache lines are allocated to the new memory addresses, sending the dirty data stored in the cache lines to the memory controller includes: before the cache lines are allocated to the new memory addresses, when a quantity of read commands in the read queue of the memory controller is less than a first specified value, sending the dirty data stored in the cache lines to the memory controller.

According to the control method for a cache provided in embodiments of this application, before the cache lines are allocated to the new memory addresses, when the quantity of read commands in the read queue of the memory controller is less than the first specified value, the dirty data stored in the cache lines is actively sent to the memory controller and written into the memory, and when the quantity of read commands in the read queue is small, the dirty data is sent to the memory controller and written into the memory, so that interference caused by the write command to the read command can be reduced, the quantity of read/write switching times can be reduced, a read delay can be reduced, and the memory access efficiency is improved.

In a possible implementation, before the cache lines are allocated to the new memory addresses, sending the write command stored in the cache lines to the memory controller includes: before the cache lines are allocated to the new memory addresses, when a quantity of dirty cache lines reaches a second specified value, sending the dirty data stored in the cache lines to the memory controller.

According to the control method for a cache provided in embodiments of this application, before the cache lines are allocated to the new memory addresses, if the quantity of dirty cache lines in the cache reaches the second specified value, the dirty data stored in the cache lines is actively sent to the memory controller and written into the memory. The dirty cache lines refer to the cache lines storing the dirty data, and the second specified value may be set based on a total quantity of cache lines in the cache. It is assumed that states of all the cache lines are dirty. If new data or a new command arrives at the cache, a dirty cache line inevitably needs to be replaced, that is, allocated to a new address, and dirty data stored in the dirty cache line is converted into a write command and sent to the memory controller when the dirty cache line is replaced. Therefore, the dirty data is passively sent to the memory controller, and efficiency of scheduling a read/write command by the memory controller may be reduced. Writing the dirty data into the memory may affect execution of a read command, leading to a read delay. However, if the quantity of dirty cache lines in the cache is small, when the new data or the new command arrives at the cache, the new data or the new command may be allocated to clean cache lines. In this way, no replacement occurs, and no dirty data is passively sent to the memory controller. In other words, a large quantity of dirty cache lines indicates a high probability that the dirty data is passively sent to the memory controller. Therefore, the second specified value herein may be set based on the total quantity of cache lines, for example, set to 1/2 or 2/3 of the total quantity of cache lines. In this way, a quantity of clean cache lines in the cache can be kept at a high level, a case in which the dirty data is passively sent to the memory controller can be avoided, and that the dirty data being written into the memory affects execution of the read command is avoided, thereby improving the memory access efficiency.

In a possible implementation, sending the dirty data stored in the cache lines to the memory controller includes: selecting, based on a memory address currently accessed by the memory controller, dirty data whose target address and the currently accessed memory address are located in a same memory rank, and sending the dirty data to the memory controller.

The dirty data whose target address and the currently accessed memory address are located in the same memory rank is selected and sent to the memory controller. In this way, after the dirty data is sent to the memory controller, the dirty data can be written into the memory without memory rank switching, thereby reducing one time of a memory rank switching process. Because memory rank switching during memory access leads to a delay, access efficiency is reduced. Therefore, sending the dirty data whose target address and the currently accessed memory address are located in the same memory rank to the memory controller can improve the memory access efficiency.

In a possible implementation, sending the dirty data stored in the cache lines to the memory controller includes: selecting, based on a memory address currently accessed by the memory controller, dirty data whose target address and the currently accessed memory address are located in a same memory bank, and sending the dirty data to the memory controller. In this way, a delay caused by memory bank switching can be reduced, and the memory access efficiency can be improved.

In a possible implementation, sending the write command stored in the cache lines to the memory controller includes: selecting, based on a memory address currently accessed by the memory controller, dirty data whose target address and the currently accessed memory address are located in a same row, and sending the dirty data to the memory controller. Because in a memory access process, all data in a same row is prefetched. In other words, when the data in the same row is accessed, a delay is short even if data in different memory ranks is read, and efficiency of executing commands in a same row is high. Therefore, the dirty data whose target address and the currently accessed memory address are located in the same row is sent to the memory controller. In this way, a delay caused by row switching can be reduced, and the memory access efficiency can be improved.

In a possible implementation, before sending the dirty data stored in the cache lines to the memory controller, the method further includes: obtaining running status information of the memory controller. The running status information includes a quantity of read commands in the read queue of the memory controller and the memory address currently being accessed by the memory controller.

In a possible implementation, the cache includes a plurality of sets, each set includes a plurality of cache lines, and storing the write data of the received write command into the cache lines includes: allocating, to the cache lines of the same set for cache, received write data of the write commands whose target addresses are located in a same row. In this way, when the write commands are scheduled based on the memory address currently being accessed by the memory controller, dirty data located in a same row can be efficiently obtained through matching, thereby improving scheduling efficiency.

In a possible implementation, the cache includes a plurality of sets, each set includes a plurality of cache lines, and storing the write data of the received write command into the cache lines includes: allocating, to the cache lines of the plurality of adjacent sets for cache, received write commands whose target addresses are located in a same row. A quantity of cache lines in the set of the cache is limited. If an amount of write data of the write commands in the same row is excessively large, and all the cache lines in the set are occupied, the dirty data in the dirty cache line is passively sent to the memory controller when the new data or the new command arrives at the cache. To avoid this case, the write data of the write commands in the same row may be further allocated to cache lines of several adjacent sets for cache. This improves a cache capability, and avoids passively sending the dirty data to the memory controller. In addition, the write commands in the same row can be quickly obtained through matching from the several adjacent sets, thereby improving the memory access efficiency.

According to a second aspect, an embodiment of this application further provides a cache, and the cache is configured to perform the control method according to any implementation of the first aspect.

According to a third aspect, an embodiment of this application further provides a computer system. The computer system includes a processor, a memory, and the cache according to the second aspect, and the processor, the memory, and the cache are connected through a bus.

### BRIEF DESCRIPTION OF DRAWINGS

FIG. 1 is a diagram of an electronic device according to an embodiment of this application;
FIG. 2 is a diagram of a memory according to an embodiment of this application;
FIG. 3 is another diagram of a memory according to an embodiment of this application;
FIG. 4 is a diagram of an electronic device according to an embodiment of this application;
FIG. 5 is a diagram of another electronic device according to an embodiment of this application;
FIG. 6 is a diagram of mapping between a memory and a cache according to an embodiment of this application;
FIG. 7 is a diagram of a structure of a cache according to an embodiment of this application;
FIG. 8 is a diagram of physical address mapping according to an embodiment of this application;
FIG. 9 is a schematic flowchart of a control method according to an embodiment of this application;
FIG. 10 is a schematic flowchart of another control method according to an embodiment of this application;
FIG. 11 is a schematic flowchart of another control method according to an embodiment of this application;
FIG. 12 is a schematic flowchart of another control method according to an embodiment of this application;
FIG. 13 is a schematic flowchart of another control method according to an embodiment of this application;
FIG. 14 is a schematic flowchart of another control method according to an embodiment of this application;
FIG. 15 is a schematic flowchart of another control method according to an embodiment of this application;
FIG. 16 is a schematic flowchart of another control method according to an embodiment of this application;
FIG. 17 is a diagram of a physical address according to an embodiment of this application;
FIG. 18 is a diagram of mapping a physical address to a cache according to an embodiment of this application;
FIG. 19 is another diagram of mapping a physical address to a cache according to an embodiment of this application;
FIG. 20 is a schematic flowchart of another control method according to an embodiment of this application;
FIG. 21 is a schematic flowchart of another control method according to an embodiment of this application;
FIG. 22 is a diagram of another cache according to an embodiment of this application; and
FIG. 23 is another schematic flowchart of a control method for a cache according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

The terms such as "first" and "second", below are merely for convenience of description, and are not to be construed as indicating or implying relative importance or implicitly indicating a quantity of indicated technical features. Therefore, a feature limited by "first", "second", or the like may explicitly or implicitly include one or more features. In the description of this application, unless otherwise stated, "a plurality of" means two or more than two. For example, a plurality of processing units means two or more processing units.

In addition, in embodiments of this application, "up", "down", "left", and "right" are not limited to definitions relative to directions in which components are schematically placed in the accompanying drawings. It should be understood that these directional terms may be relative concepts used for relative description and clarification, and may change correspondingly based on a change of a direction in which a component in the accompanying drawings is placed. In the accompanying drawings, for clarity, thicknesses of layers and areas are exaggerated, and a size proportion relationship between parts in the figures does not reflect an actual size proportion relationship.

In embodiments of this application, unless otherwise explicitly specified and limited, the term "connection" should be understood in a broad sense. For example, the "connection" may be a fixed connection, a detachable connection, or an integrated connection. Alternatively, the "connection" may be a direct connection or an indirect connection through an intermediary. Further, the term "electrical connection" may be a direct electrical connection or an indirect electrical connection through an intermediary.

In embodiments of this application, the term "module" is usually a functional structure divided based on logic, and the "module" may be implemented by pure hardware, or may be implemented by a combination of software and hardware. In embodiments of this application, the term "and/or" describes an association relationship between associated objects and indicates that three relationships may exist. For example, A and/or B may indicate the following three cases: Only A exists, only B exists, and both A and B exist.

In embodiments of this application, a word like "example" or "for example" is used for representing an example, an example illustration, or description. Any embodiment or design solution described as "example" or "for example" in embodiments of this application is not to be construed as being more preferred or advantageous than another embodiment or design solution. Exactly, use of the word like "example" or "for example" is intended to present a related concept in a specific manner.

A computer system includes two parts: a hardware system and a software system. For example, the hardware system includes a central processing unit, a mainboard, a memory, an input/output device, a power supply device, and the like, and the software system includes system software and application software.

A concept of "stored program" is proposed by Von Neumann in 1945. Computers based on this concept are collectively referred to as Von Neumann computers. The Von Neumann computer includes five parts: an input device, an output device, a memory, an arithmetic unit, and a controller. The arithmetic unit is configured to complete arithmetic and logical operations, and temporarily store intermediate results of the operations in the arithmetic unit. The controller is configured to control and command input and running of a program and data, and process an operation result. The memory is configured to store data and a program. The input device is configured to convert an information form that people are familiar with into an information form that can be recognized by the computer. Common input devices include a keyboard, a mouse, a microphone, a scanner, and the like. The output device can convert an operation result of the computer into an information form that people are familiar with. For example, the output device is a display, a printer, a stereo, or the like. Currently, the controller and the arithmetic unit of the computer are combined and are collectively referred to as a central processing unit (central processing unit, CPU), which is referred to as a processor or CPU below, and the input device and the output device are referred to as an I/O device (input/output device) for short.

A storage is a memory component for storing a program and various data information. There are three main indicators of the storage: a speed, a capacity, and costs. Usually, a higher speed indicates higher costs, and a larger capacity indicates a lower speed. For a computer system, a multi-level storage system is usually used, and various storages with different storage capacities, read/write speeds, and costs form a multi-level storage based on a hierarchical structure, for example, a cache, a main memory, and an auxiliary memory, and are organically combined into a whole by using management software and auxiliary hardware. In this way, stored programs and data are distributed in the various storages based on a hierarchy.

The main memory (main memory) may directly exchange data or information with the CPU, and is configured to store a program and data that need to participate in running, and is also referred to as a memory. All computer programs are run in the memory, and performance of the memory affects overall performance of the computer. When the computer is running, an operating system transfers to-be-processed data from the memory to the CPU for computing. The computer cannot run properly without the memory.

The memory can exchange data with the CPU, the cache, and the auxiliary memory, which is an important part of the storage system. Parameters of the memory, such as a capacity, bandwidth, and costs, restrict development of the computer system. The computer system in embodiments of this application may be a computer, or certainly may be a mobile device, for example, an electronic device like a mobile phone or a tablet.

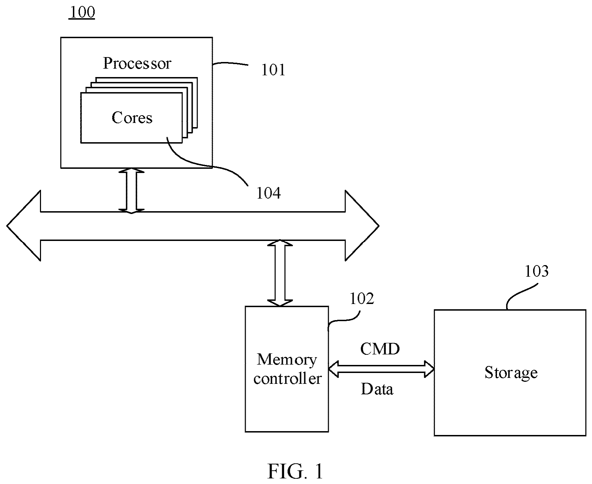

For example, the electronic device is the computer system. FIG. 1 is a diagram of an architecture of an electronic device according to an embodiment of this application. As shown in FIG. 1, an electronic device 100 may include at least a processor 101, a memory controller (memory controller) 102, and a storage 103. It should be noted that in the computer system provided in this embodiment of this application, in addition to the components shown in FIG. 1, the electronic device 100 may further include a communication interface and another component like a disk that is used as an auxiliary memory. This is not limited herein.

The processor 101 is a computing core and a control unit (control unit) of the electronic device 100. The processor 101 may include a plurality of cores (cores) 104. An operating system and another software program are installed in the processor 101, so that the processor 101 can access the storage 103, a cache, and a magnetic disk. In this embodiment of this application, the core 104 in the processor 101 may be a central processing unit (central processing unit, CPU), an artificial intelligence (artificial intelligence, AI) processor, a digital signal processor (digital signal processor), or a neural-network processing unit, or may be another application-specific integrated circuit (application-specific integrated circuit, ASIC), or the like. The memory controller 102 is a bus circuit controller that controls the storage 103 inside the electronic device 100 and is configured to manage and plan data transmission from the storage 103 to the core 104. Data exchange may be performed between the storage 103 and the core 104 via the memory controller 102. The memory controller 102 may be a separate chip, and is connected to the core 104 through a system bus. The memory controller 102 may alternatively be integrated into the processor 101, or may be built in a northbridge. A specific location of the memory controller 102 is not limited in this embodiment of this application. During actual application, the memory controller 102 may control necessary logic to write data into the storage 103 or read data from the storage 103.

The storage 103 is an internal memory of the electronic device 100, and is usually configured to store various software that is running in the operating system, input and output data, information exchanged with an external memory, and the like. The processor 101 can access the storage 103 at a high speed via the memory controller 102, to perform a read operation and a write operation on any memory cell of the storage 103. Usually, a dynamic random access memory (dynamic random access memory, DRAM) is used as the memory.

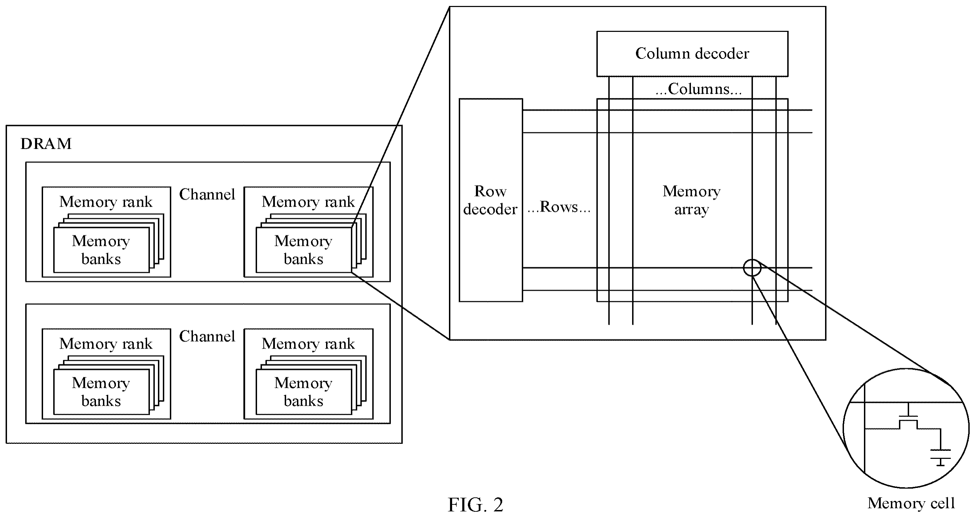

FIG. 2 is a diagram of a DRAM. A channel (channel) is independent accessible storage space, and the storage space may include one or more memory ranks (ranks). Usually, one channel includes storage space of a specific capacity and a hardware circuit used to access the storage space. The hardware circuit may include related circuits controlling logic and an interface.

The channel may include the memory ranks (ranks). A memory rank (rank) refers to memory chips (chips) connected to a same chip select (chip select) signal, and the memory chips are also referred to as chips. Because these chips are connected to a same chip select signal, the memory controller 102 can perform a write operation on chips in a same memory rank, and the chips in the same memory rank also share a same control signal.

Each memory rank may include one or more memory banks (banks). For example, one memory rank may include four banks, or may further include eight banks. A bank of the DRAM includes one or more memory arrays (arrays). Each memory array includes a plurality of memory cells (memory cells) distributed in rows (rows) and columns (columns). Alternatively, each memory array may further include a plurality of sub-arrays (sub-arrays), and the sub-arrays include a plurality of memory cells distributed in rows (rows) and columns (columns). The memory cell may be configured to store 1-bit data, for example, store "0" or "1". Any memory cell of the memory array may be located via a row decoder and a column decoder.

With reference to FIG. 1 and FIG. 2, the memory controller 102 may respond to a memory access request of the processor 101. For example, the access request may include a read command or a write command, to access a specific memory cell, read data stored in the memory cell, or write data into the memory cell.

A memory request initiated by the processor 101 is first placed in a request queue. The memory controller 102 translates the memory request initiated by the processor, and sends the memory request to a DRAM queue for execution. Usually, the request sent by the processor 101 includes an address. After the address is parsed, information like a channel number, a rank number, a bank number, a row number, and a column number may be obtained.

The processor 101 accesses the memory based on an address, that is, the memory actually stores two pieces of information: the address and data stored at the address.

For example, in FIG. 3, 0000 to 0007 are addresses of memory cells of the memory, and A to H are stored data. The processor accesses data based on an address. For example, if H needs to be read, the processor should access a memory cell corresponding to the address 0007.

Before reading or writing data, the memory controller needs to first send a row active command (row active command) to access a specified row in the memory array. To access data in the memory cell of the DRAM, a precharge (precharge) operation needs to be performed first. Correspondingly, before the memory controller 102 sends the row active command to access the specific row, the memory controller needs to send a precharge command (precharge command) to perform the precharge operation on a bank in which the row is located.

After sending a row active command, the memory controller can send a second row active command to access another row only after waiting for one piece of row cycle time (row cycle time). The row cycle time is a sum of precharge time and row active time. When an address is accessed, a row needs to be activated first. Therefore, there is a delay in switching between different rows in a same bank and switching between ranks.

In addition, although a data bus between the processor and the DRAM is bidirectional, for the write command, the processor outputs data through the data bus, which is an output direction; and for the read command, the processor inputs data through the data bus, which is an input direction. For a read/write command, in addition to read/write data, a data clock accompanying the data also needs to be read. Therefore, each time a read/write direction is switched, there is a delay, which is referred to as bus diversion time. Therefore, read commands and write commands are usually processed in batches, to avoid frequent read/write switching.

With development of integrated circuit technologies, performance of a processor is continuously enhanced, and a running speed is increasingly fast. In addition, application fields of computers are continuously expanded, and sizes of system software and application software are increasingly large. Objectively, a large-capacity memory is required to support running of the software. In consideration of two factors: costs and capacities, currently, a computer usually uses a DRAM, for example, a double data rate synchronous dynamic random access memory (Double Date Rate SDRAM, DDR SDRAM), as a memory. However, compared with a running speed of the processor, a speed of the DDR SDRAM is slow, and consequently, it is difficult to meet a speed requirement of the high-performance processor. As mentioned in the foregoing example, the program is run in the memory. When the processor needs to run a program, the processor first loads the executable program from the auxiliary memory to the memory, and then starts to execute the program. There are a stack of general-purpose registers (registers) in the processor. The processor adds 1 to data (it is assumed that an address is A) by using the following three steps:
Step 1: The processor reads the data at the address A from the memory to an internal general purpose register x0.
Step 2: Add 1 to the general register x0.
Step 3: The processor writes a value of the general register x0 into the memory.

Because a speed of the general-purpose register is greatly different from a speed of the memory, the speed of the general-purpose register may reach dozens of times or even hundreds of times of the speed of the memory. In the three steps mentioned in the foregoing example, the memory needs to be accessed in the step 1 and the step 3, the speed is actually slow, and the processor needs to wait for long time. If the speed of the memory can be improved, performance of a computer system can be greatly improved. However, the DDR SDRAM is usually used as the memory, and a capacity is large. If a memory is prepared based on a material that can achieve a high speed, and a capacity is required to be not reduced, costs of the memory are greatly increased. Therefore, a compromise method is adopted. To be specific, a storage device with a high speed but a small capacity is configured, so that costs of the storage device are not excessively high, but an access speed can still be improved. The storage device is the cache mentioned in the foregoing example.

Based on features of a Von Neumann computer, data during running of a processor has temporal locality and spatial locality. The temporal locality means that if a piece of data is currently used, the data is likely to be used again in a following period of time. The spatial locality means that if a piece of data is currently used, data around the data (near a same address) may also be likely to be used again in a following period of time.

Based on the foregoing locality principle, a cache (cache), referred to as a cache for short, may be configured between the processor and a memory, to improve a running speed of the processor. Only a small quantity of instructions or a small amount of data that the processor needs to use recently and an address of a memory unit storing the instructions or the data are copied to a cache with a high speed, to provide the instructions or the data for the processor to use.

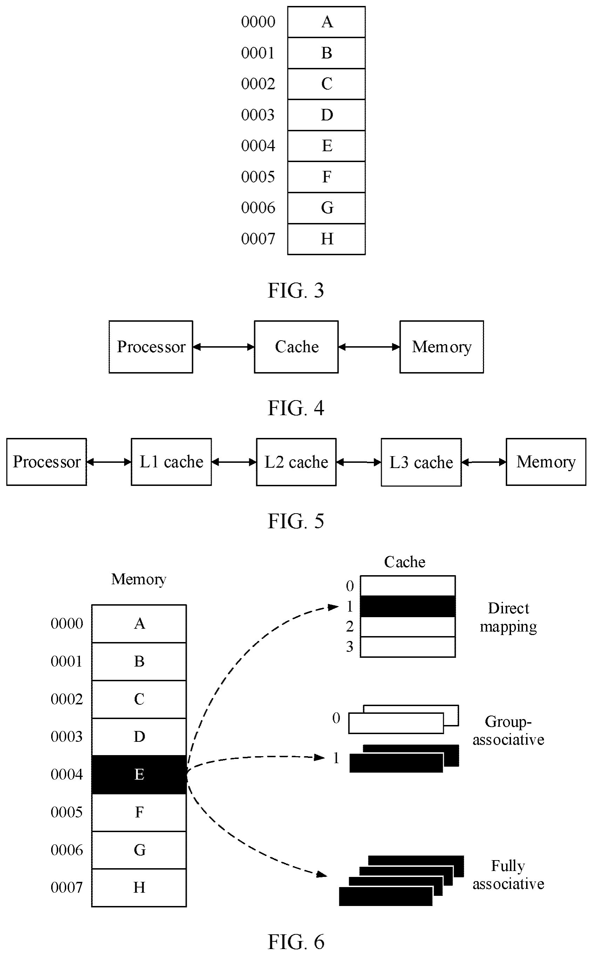

In terms of hardware, refer to FIG. 4. The cache is usually disposed between the processor and the memory, and is used as a cache of memory data. When the processor attempts to read data from the memory or store data, the processor first searches the cache for whether data corresponding to an address is cached in the cache. If the data corresponding to the address is cached in the cache, this case is referred to as a hit (hit). In this case, the data is directly extracted from the cache and returned to the processor. Because the cache is fast, waiting time of the processor can be reduced, and running efficiency can be improved.

If the data is written into the memory, and the data to be rewritten is in the cache, the data in the cache is rewritten, and the cache writes the rewritten data into the memory at a random occasion. If the rewritten data is not in the cache, the data may be directly written into the memory, or the data is first written into the cache and then written into the memory.

A speed of the cache also affects the performance of the system to some extent. Usually, the speed of the cache may reach 1 ns, which is almost equivalent to the speed of the general-purpose register of the processor. However, when the cache does not cache data required by the processor, this case is referred to as a miss (miss), and the data still needs to be loaded from the memory.

To further improve performance, multi-level caches are introduced into the computer system. The cache mentioned above is referred to as an L1 cache (level-1 cache). Refer to FIG. 5. An L2 cache may be connected to the L1 cache, an L3 cache may be connected between the L2 cache and the memory, or more levels of caches may be disposed. A higher level indicates a slower speed and a larger capacity. However, the speed is still higher than that of the memory. After caching of the multi-level caches, a speed difference between levels of caches and the memory gradually decreases. Usually, a last level of cache before the memory is referred to as a last level cache (last level cache, LLC). For example, in the foregoing example, the LLC is the L3 cache.

When the processor attempts to load data from an address, the processor first queries whether the L1 cache is hit. If the L1 cache is hit, the processor returns the data to the processor. If the L1 cache is missed, searching continues to be performed in the L2 cache. When the L2 cache is hit, the data is returned to the L1 cache and the processor. If the L2 cache is also missed, searching continues to be performed in the L3 cache. When the L3 cache is hit, the data is returned to the L1 cache, the L2 cache, and the processor. If the L3 cache is also missed, the data needs to be loaded from the main memory and returned to the L3 cache, L2 cache, L1 cache, and processor.

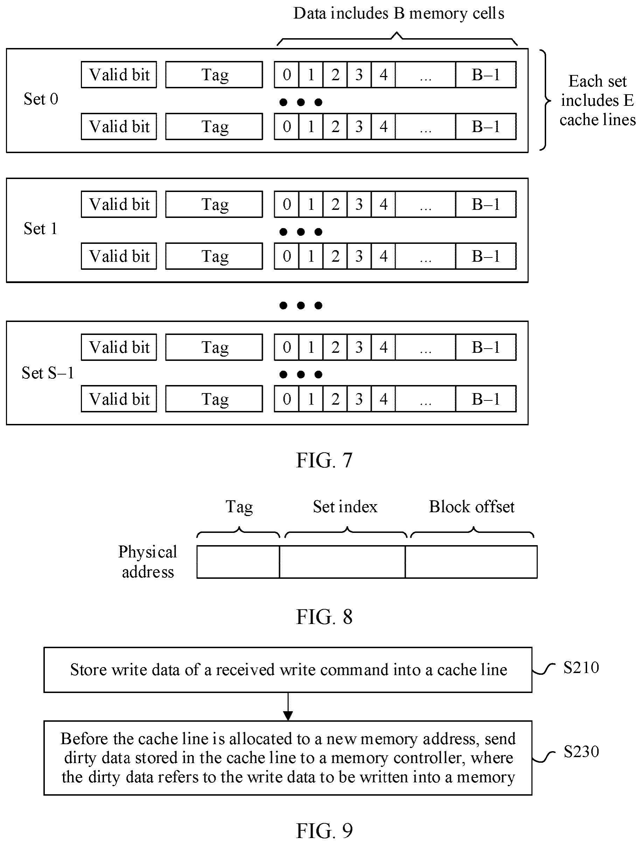

Therefore, data stored in a cache is actually a subset of data in the memory. Therefore, for a piece of data in the memory, there may be three types of caches based on quantities of locations, in the caches, at which the data can be placed. Refer to FIG. 6. First type: If only one location in a cache can accommodate the data, the cache is a directly mapped cache. Second type: If a plurality of locations in a cache can accommodate the data, the cache is a group-associative cache. Third type: If the data can be placed at any location in a cache, the cache is a fully associative cache. Refer to FIG. 7. A structure of a cache is similar to a structure of a memory, and also includes an address and stored data. However, in addition to the stored data (data), content of the cache further includes a tag (tag) and physical memory address information of the data stored in the tag. Because addressing information sent by a processor is sent for a physical memory, in addition to the data information, an address corresponding to the data needs to be stored in the cache, so that the cache can search for the corresponding data in the physical memory based on the physical memory address information. A row including a tag and data corresponding to the tag is referred to as a cache line (cache line). Certainly, to accelerate searching, the cache usually further includes a valid bit (valid bit), which is used to mark whether the cache line stores valid data.

One cache is divided into S sets (sets), and each set has E cache lines (cache lines). A cache line (cache line) includes a valid bit (valid bit), a tag (tag), and data (data). The data part includes B memory cells. In a modern processor, the memory cell is usually in a unit of byte (usually 8 bits), and is also a smallest addressing unit. The data part is data in a memory address to be actually cached, and the tag is a tag used to search for a cache line. The valid bit is usually 1 bit, indicating whether the cache line is valid. For example, when the valid bit is 1, it indicates that the cache line is valid; and if the valid bit is 0, it indicates that the cache line is invalid.

The following describes how to map a physical address of a memory to a cache line. First, it is assumed that the physical address is m bits. An addressing range is from 000...00 to FFF...FF (m bits). Refer to FIG. 8. It is assumed that the physical address of the memory is divided into the following three ranges: a tag (tag), a set index (set index), and a block offset (block offset). The tag range includes high t bits (bits) of the physical address, the set index range includes middle s bits of the physical address, and the block offset range includes low b bits of the physical address. The cache includes the S sets (sets), each set (set) includes the E cache lines (cache lines), and the data part of each cache line (cache line) includes the B memory cells, where S=2^{s} and B=2^{b}.

A physical address of one memory cell of the memory is divided into three ranges: a tag (tag), a set index (set index), and a block offset (block offset). The set index (set index) is middle s bits of the physical address, and determines a set (set), of the cache, to which the memory cell of the memory is mapped. The block offset (block offset) is low b bits of the physical address, and determines a memory cell, of the B memory cells of the cache line (cache line), to which the memory cell of the memory is mapped. Because a plurality of memory addresses may be mapped to a same cache line (cache line), the tag (tag) (high t bits of the physical address) is used to check whether the cache line is a memory unit to be accessed by the processor.

In a process of accessing the cache by the processor, a set (set) of a cache in which data at the address may be stored is first found based on the set index (set index) of the physical address. After the set (set) is found, a tag (tag) of the physical address is compared with tags of a plurality of cache lines (cache lines) in the determined set (set) of the cache. Whether there is a cache line that matches the tag is searched for. If the matched cache line is found, and a valid bit of the cache line is 1, corresponding data in the cache line is found based on the block offset (block offset) of the physical address.

It can be learned that, the memory cell of the memory may be mapped to a specified cache line based on the set index (set index) and the tag (tag) of the physical address of the memory cell, and a specified memory cell in a cache line storing data in the memory is determined based on the block offset (block offset) of the physical address. On the contrary, when the cache is searched for whether the data in the memory is cached, the cache may alternatively be searched for based on the physical address of the memory cell of the memory.

The cache may improve running efficiency of the processor. As mentioned in the foregoing example, the memory controller schedules the access request of the processor. In consideration of frequency and delay, a depth of an internal queue (queue) in a DDR memory controller (DDR Memory Controller, DDC) is small. If only the DDR memory controller (referred to as the memory controller) performs read/write scheduling, a quantity of read/write switching times is large, and overheads for read/write switching greatly affect performance of the memory, for example, a waste of read/write bandwidth is caused, and the performance of the computer system deteriorates.

To increase a command scheduling capability of the memory controller, in a possible implementation, the depth of the queue is increased, and a read command queue and a write command queue of the memory controller are separated. In this way, a read command arbitration and a write command arbitration may be separated, and a command cache capability is doubled at same frequency, so that the memory controller schedules a read/write command, and the overheads for read/write switching are reduced.

For example, if the depth of the queue of the memory controller is 64, and a read command and a write command share a same queue, an arbiter that selects one from 64 needs to arbitrate from 64 read commands or write commands, to obtain a command with high access efficiency and schedule the command to the memory for execution. However, in this case, more read commands or write commands cannot be cached. If two queues with depths of 64 are set, one is used to cache read commands, and the other is used to cache write commands, one arbiter that selects one from 64 may select one read command from a read command queue, another arbiter that selects one from 64 selects one write command from the write commands, and one arbiter that selects one from 2 selects either the selected read command or the selected write command for execution, which is equivalent to scheduling the 128 commands. Although this manner can improve a cache capability to some extent, improvement is limited, and arbitration transactions are also increased.

For the read command and the write command, the processor usually needs to perform further processing on an execution result of the read command, that is, read data. If an execution speed for the read command is slow, a data access speed is slow, which reduces the running efficiency of the processor. The write command only needs to write data into the memory, and a write result has small impact on running of the processor. Therefore, a delay of the read command is more easily sensed than a delay of the write command. As a result, the memory controller preferentially schedules and processes the read command when scheduling commands, to reduce impact of the write command on the read command, and reduce a read delay. In this way, a cache capability for the write command needs to be increased. However, because the depth of the queue of the memory controller is limited, to enhance a scheduling capability, an embodiment of this application provides an implementation in which a last level cache (last level cache) is configured to cache some write commands. In this way, the cache capability for the write command can be enhanced.

For example, some cache lines in the LLC are used as write command caches of the memory controller to store the write data of the write command, thereby improving the capability of the memory controller to cache the write command. However, the memory controller cannot actively schedule the write command cached in the LLC, and can only passively receive a write command sent by the LLC to the memory controller. Therefore, in this manner, the cache capability for the write command can be increased, but improvement of scheduling efficiency is limited.

For example, a cache line 0 in the LLC stores write data, that is, DATA1, of a write command. When the cache line 0 does not store data, a state of the cache line 0 is clean (clean). After DATA1 is stored, the state of the cache line 0 changes to dirty (dirty). DATA1 is also referred to as dirty data, that is, data that is inconsistent with data in the memory and needs to be written into the memory. If the cache line 0 in the dirty state is allocated to another address to store data corresponding to the another address, DATA1 stored in the cache line 0 needs to be kicked out to the memory controller. In this scheduling manner, when the cache line 0 is allocated to the another address, the stored dirty data is passively kicked out. This is a passive scheduling manner. Although the cache capability for the write command can be increased, an occasion for passively kicking out the dirty data to the memory controller is not controlled, and scheduling and execution of the read command may still be affected, leading to the read delay.

For example, it is assumed that the cache line 0 stores the dirty data, which is denoted as DATA1. The LLC receives a plurality of commands, for example, five read commands. If one of the five read commands is allocated to the cache line 0, DATA1 stored in the cache line 0 is kicked out to the memory controller and converted into a write command, and DATA1 is written into the memory. When the five read commands are sent to the memory controller for execution, writing of DATA1 may hinder execution. Read/write switching needs time, and consequently, delays of the five read commands increase.

A reason for the read delays herein is that when the read commands are executed, the memory controller receives the dirty data that is passively kicked out by the LLC to the memory controller, and the dirty data needs to be written into the memory. If a proper occasion is found before this to actively send the dirty data stored in the dirty cache line to the memory controller, when a new command arrives, the state of the cache line has changed to clean because the dirty data has been kicked out by the LLC. In this way, passively kicking out the dirty data to the memory controller does not occur when the new command arrives. This can avoid a delay caused by writing of the data to execution of the read command, and can improve memory access efficiency.

For example, refer to FIG. 9. An embodiment of this application provides a control method for a cache, including the following steps.

S210: Store write data of a received write command into a cache line.

S230: Before the cache line is allocated to a new memory address, send dirty data stored in the cache line to a memory controller, where the dirty data refers to the write data to be written into a memory.

The cache may be a last level cache (last level cache, LLC) provided in embodiments of this application. When a new write command arrives at the cache, the cache allocates the write command to a cache line for storage, and a state of the cache line changes from clean (clean) to dirty (dirty). Before the dirty cache line is allocated to a new memory address, dirty data stored in the cache line is sent to the memory controller. In this way, when a new command arrives at the cache, because the dirty data stored in the cache line has been sent to the memory controller, the state of the cache line changes to the clean state. Therefore, when the new command arrives, passively kicking out the dirty data to the memory controller does not occur, and writing of the dirty data that is passively sent to the memory controller does not affect execution of the read command.

When the cache passively sends the write command to the memory controller, an occasion is uncontrollable, and the memory controller may be executing the read command. In this case, the write command sent to the memory controller may affect a time sequence of the read command that is being executed and a subsequent read command. Therefore, in the method provided in this embodiment of this application, before the cache line of the write command is allocated to the new memory address, a proper occasion may be actively found, and the dirty data may be actively sent to the memory controller, instead of being passively sent to the memory controller when the cache line is allocated to the new memory address. A case in which the cache passively sends the dirty data to the memory controller is avoided by actively scheduling the write command, and that the dirty data being written into the memory affects execution of the read command in the memory controller is avoided, thereby reducing a read delay and improving memory access efficiency.

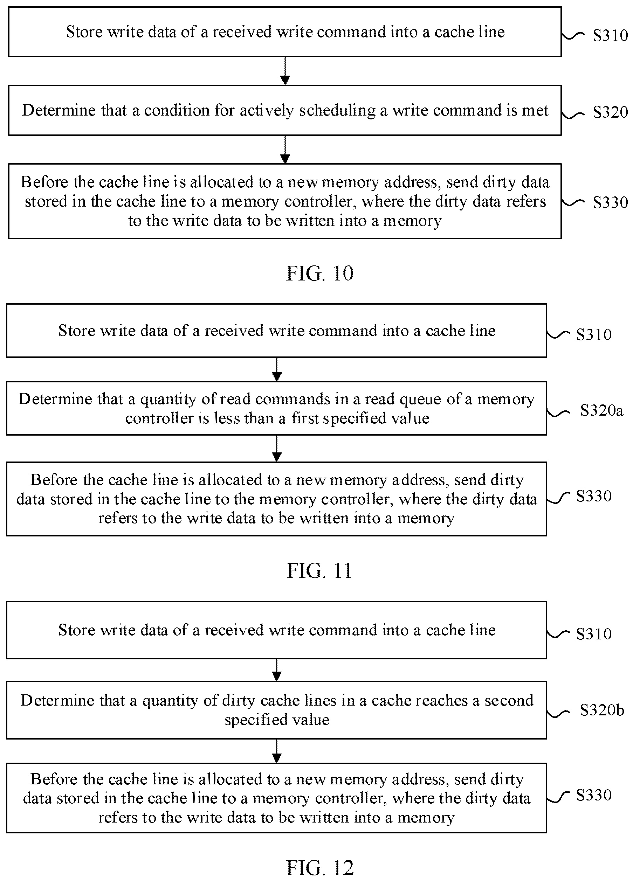

The following describes, with reference to specific embodiments, the control method for a cache provided in this application. For example, FIG. 10 is a schematic flowchart of a control method for a cache according to an embodiment of this application. The cache herein may be an LLC. The control method includes the following steps.

S310: Store write data of a received write command into a cache line.

S320: Determine that a condition for actively scheduling a write command is met.

S330: Before the cache line is allocated to a new memory address, send dirty data stored in the cache line to a memory controller, where the dirty data refers to the write data to be written into a memory.

According to the solution provided in this embodiment of this application, before the cache line that has stored the dirty data is allocated to the new memory address, whether the condition for actively scheduling a write command is met is determined. When the condition for actively scheduling a write command is met, the dirty data stored in the cache line is sent to the memory controller. In this way, that the dirty data is sent to the memory controller at an uncontrollable occasion is avoided, and that the dirty data being written into the memory affects execution of a read command is avoided, thereby improving memory access efficiency.

Before the write command is sent to the memory controller, whether the condition for actively scheduling a write command is met needs to be determined. When the condition is met, the cache actively sends the dirty data to the memory controller. For example, with reference to FIG. 11, S320 includes the following steps.

S320a: Determine that a quantity of read commands in a read queue of the memory controller is less than a first specified value.

For example, the condition for actively scheduling a write command may include: whether the quantity of read commands in the read queue of the memory controller is less than the first specified value. If the quantity is less than the first specified value, it indicates that there are a small quantity of read commands in the memory controller, and it is considered that the condition for actively scheduling a write command is met.

When the memory controller is in an idle state or the quantity of read commands in the read command queue is small, the memory controller may schedule the read commands and write commands to reduce a read delay. Because the overall quantity of read commands is small and execution efficiency is high, when the quantity of read commands is less than the first specified value, it is considered that the condition for actively scheduling a write command is met. Before the cache line is allocated to the new memory address, when the quantity of read commands in the read queue of the memory controller is less than the first specified value, the cache sends the dirty data to the memory controller. In this way, a process of writing the dirty data into the memory has little impact on the read commands (because the quantity of read commands is small), and has little impact on the memory access efficiency. The first specified value may be set based on performance of the memory and the memory controller.

In the foregoing example, an example in which the condition for actively scheduling a write command is that the quantity of read commands in the read queue of the memory controller is less than the first specified value is used for description. In addition, an embodiment of this application further provides another case, and active scheduling may be performed.

When the cache caches data, if a cache line already stores data and is in a dirty (dirty) state, the stored data is dirty data. If the cache line needs to be allocated to a new memory address to store data corresponding to the new memory address, that is, the previous dirty data needs to be replaced by the data at the new memory address, to maintain data consistency, before the dirty cache line is replaced, the dirty data needs to be sent to the memory controller and written into the memory, and the cache line changes to a clean (clean) state. These replacements may be performed based on specific policies, for example, may be performed based on least data. However, it may be understood that it is assumed that states of all cache lines are dirty. If new data or a new command arrives at the cache, a dirty cache line is inevitably replaced. If dirty data in the replaced dirty cache line is passively sent to the memory controller, the dirty data is converted into a write command, and the dirty data is written into the memory, to maintain the data consistency. Writing the dirty data into the memory may affect a scheduling sequence of read/write commands by the memory controller. For example, the write command is executed after the dirty data is sent to the memory controller instead of a read command being executed, to write the dirty data into the memory. Consequently, efficiency of scheduling the read/write command by the memory controller is reduced, and writing the dirty data into the memory may affect execution of the read command, leading to a scheduling delay. However, if a quantity of dirty cache lines in the cache is small, when the new data or the new command arrives at the cache, the new data or the new command may be allocated to a cache line in the clean state. In this way, no replacement occurs, and no dirty data is passively sent to the memory controller. Therefore, in a possible implementation, refer to FIG. 12. S320 may include the following step. S320b: Determine that the quantity of dirty cache lines in the cache reaches a second specified value.

In this embodiment, the condition for actively scheduling a write command includes: whether the quantity of cache lines in the dirty state in the cache is greater than the second specified value, and when the quantity of dirty cache lines is large, for example, is greater than the second specified value, it is considered that the condition for actively scheduling a write command is met.

For example, there are a large quantity of cache lines in the dirty state in the cache. For example, it is assumed that 1/2 of the cache lines are in the dirty state. When the new command enters the cache, there is a probability of 1/2 that the new command is allocated to a dirty cache line. In this way, dirty data in the dirty cache line is passively sent to the memory controller and is converted into a write command, and the dirty data is written into the memory. This affects execution of the read command, and affects the memory access efficiency. However, if the quantity of dirty cache lines is small, a probability of replacement is reduced. If the states of all the cache lines are in the clean state, replacement is not performed. Therefore, a larger quantity of dirty cache lines indicates a higher probability of replacement and a higher probability of passively sending the dirty data to the memory controller.

Therefore, when the quantity of occupied cache lines of the cache reaches the second specified value, it is considered that the condition for actively scheduling a write command is met. Before the cache lines are allocated to new memory addresses, when the quantity of dirty cache lines reaches the second specified value, dirty data in the cache lines is sent to the memory controller. Herein, the second specified value may be set based on performance of the cache. For example, the second specified value may be 1/2 or 2/3 of the quantity of cache lines of the cache.

Whether the quantity of read commands in the read queue of the memory controller is less than the first specified value is the condition for actively scheduling a write command provided in this embodiment of this application. Before this, running status information of the memory controller needs to be learned. In addition, when the dirty data is actively sent to the memory controller, a manner with high efficiency may be further selected based on a memory address that is being accessed by the memory controller, to selectively send the dirty data stored in the dirty cache line, to improve the memory access efficiency.

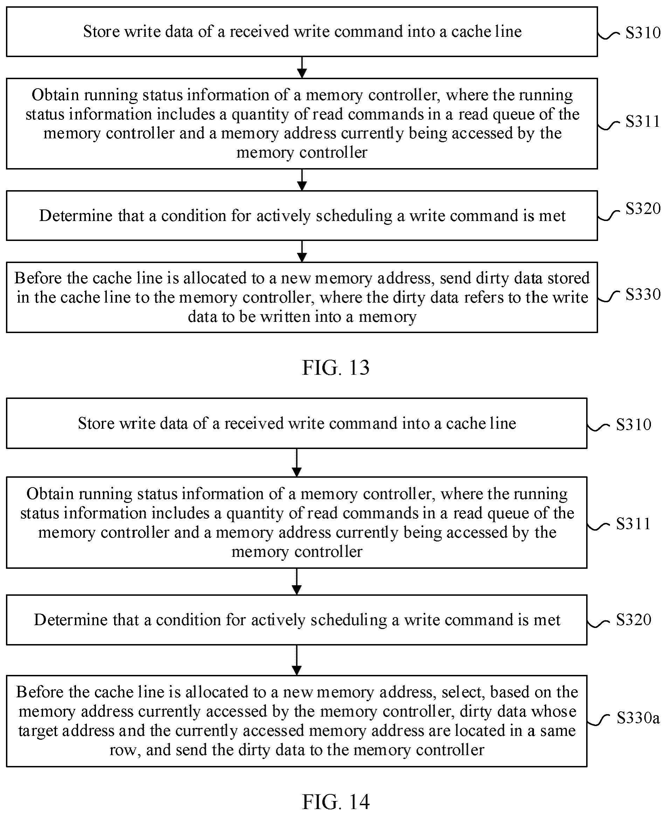

For example, refer to FIG. 13, before S320, the control method further includes the following steps.

S311: Obtain the running status information of the memory controller, where the running status information includes the quantity of read commands in the read queue of the memory controller and the memory address currently being accessed by the memory controller.

The running status information of the memory controller is obtained, for example, the quantity of read commands in the read queue of the memory controller and the memory address currently being accessed by the memory controller. After the quantity of read commands is obtained, the dirty data may be actively sent to the memory controller when the quantity of read commands in the read queue is small, for example, less than the first specified value.

It has been mentioned in the foregoing example that, during memory access, both switching between different rows in a same memory bank for access and switching between different memory ranks in a same channel for access lead to efficiency losses. To avoid such efficiency losses, in the solution provided in this embodiment of this application, when the cache actively sends the dirty data to the memory controller, and when the memory address that is being accessed by the memory controller is obtained, dirty data whose target address and a memory unit that is currently being accessed by the memory controller are located in a same row may be sent to the memory controller. Alternatively, when write commands of a same row do not exist, write commands whose target addresses are located in a same memory bank or a same memory rank are sent to the memory controller. In this way, an efficiency loss caused by row switching, memory bank switching, or memory rank switching can be reduced. The target address herein is a target address of a write command, for example, the write command includes write data and the target address. When the cache caches the write command, a cache line is determined based on the target address, and the cache line is used to cache write data of the write command.

For example, refer to FIG. 14. In a possible implementation, in S330, before the cache line is allocated to the new memory address, sending the write command cached by the cache line to the memory controller may include the following step.

S330a: Before the cache line is allocated to the new memory address, select, based on the memory address currently accessed by the memory controller, dirty data whose target address and the currently accessed memory address are located in a same row, and send the dirty data to the memory controller.

Write commands located in a same row are sent to the memory controller. In this way, regardless of whether a write command or a read command is currently being executed, after execution of a previous command ends, the write command actively sent by the cache to the memory controller can be executed without row switching, and an address of the write command and an address of the previous command are located in a same row, thereby reducing overheads generated by row switching and improving the memory access efficiency.

In a possible implementation, a write command that is located in a same row as the memory address that is being accessed by the memory controller cannot be obtained through matching in commands cached by the cache. In this case, a write command that is located in a same memory bank (bank) as the memory address that is being accessed may be selected.

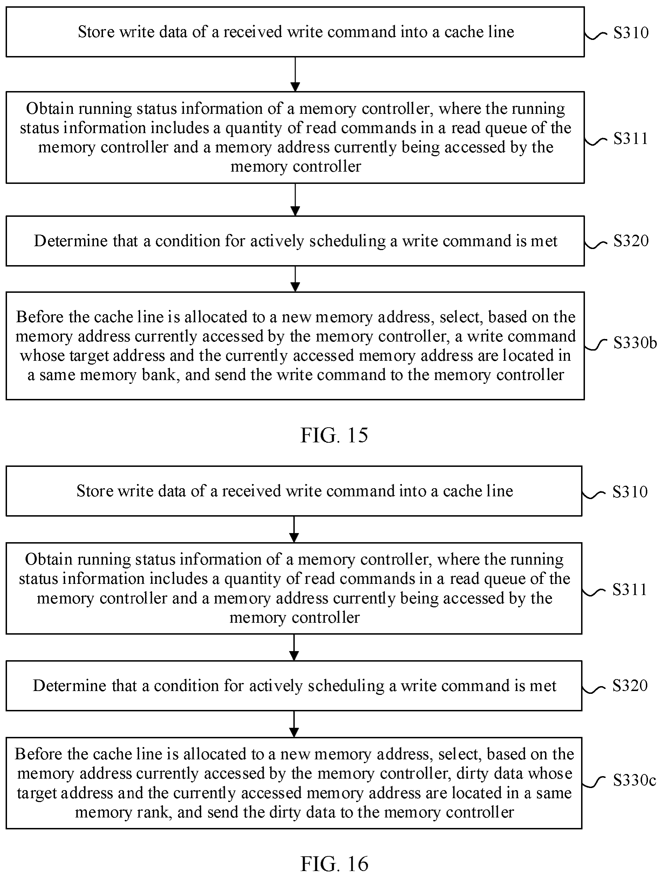

For example, refer to FIG. 15. In a possible implementation, in S330, before the cache line is allocated to the new memory address, sending the write command cached by the cache line to the memory controller may include the following step.

S330b: Before the cache line is allocated to the new memory address, select, based on the memory address currently accessed by the memory controller, a write command whose target address and the currently accessed memory address are located in a same memory bank, and send the write command to the memory controller.

In another possible implementation, a write command that is located in a same row as the memory address that is being accessed by the memory controller cannot be obtained through matching in commands cached by the cache. In this case, a write command that is located in a same memory rank (rank) as the memory address that is being accessed may be selected.

For example, refer to FIG. 16. In a possible implementation, in S330, before the cache line is allocated to the new memory address, sending the write command cached by the cache line to the memory controller may include the following step.

S330c: Before the cache line is allocated to the new memory address, select, based on the memory address currently accessed by the memory controller, dirty data whose target address and the currently accessed memory address are located in a same memory rank, and send the dirty data to the memory controller.

For example, when there is no dirty data that is located in the same memory bank (bank) as the address of the currently accessed memory unit, the dirty data that is located in the same memory rank as the address of the currently accessed memory unit is sent to the memory controller, so that overheads for memory rank switching can be reduced. After access requests of a same memory rank are executed, a memory rank is switched to for access, so that a quantity of switching times can be reduced, and the memory access efficiency can be improved.

Based on the foregoing example, it can be learned that, during memory access, row switching and memory rank switching lead to delays. When actively scheduling the write command to the memory controller, the cache may send the dirty data in the same row or the same memory rank (rank) to the memory controller, to improve the memory access efficiency. In other words, when scheduling the write command, commands at adjacent addresses should be scheduled together.

For example, a row 1 and a row 2 are located in a same memory bank (bank), a target address of data DATA1 is located in the row 1, a target address of data DATA2 is located in the row 2, and a target address of data DATA3 is also located in the row 1. If the data DATA1, the data DATA2, and the data DATA3 are written into the memory in sequence, the row 1 is first accessed, the row 2 is then switched to for access, and the row 1 is switched to for access again. Overheads for two times of row switching are generated. However, if the data DATA1 and the DATA3 whose target addresses are located in the same row are first written into the row 1, and then the data DATA2 is written into the row 2, overheads for only one time of row switching are generated. Therefore, a delay caused by row switching can be reduced, and the access efficiency can be improved.

Therefore, to implement such a scheduling manner, two prerequisites need to be ensured. First, the address that is being accessed by the memory controller needs to be determined based on the running status information of the memory controller, including a row that is being accessed, a memory bank (bank) that is being accessed, a memory rank (rank), and the like. In this way, when the write command is scheduled, dirty data at a target address and dirty data at addresses adjacent to the address that is being accessed are sent to the memory controller, thereby reducing overheads for switching, and reducing a delay. The adjacent addresses include an address that is located in a same row as the address that is being accessed, and also include an address that is located in a same memory bank (bank) or a same memory rank (rank). In addition, a memory rank (rank), a memory bank (bank), and a row in which the address to be accessed by the dirty data cached in the cache line of the cache are located should be determined, so that the dirty data at the addresses adjacent to the address that is being accessed can be efficiently selected and sent to the memory controller.

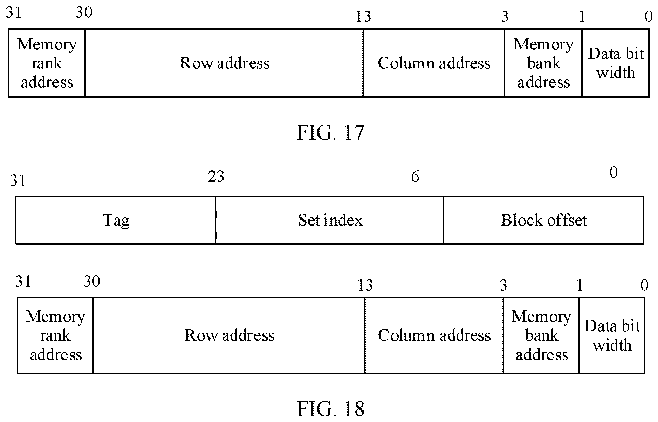

As mentioned in the foregoing example, the physical address of the memory may be mapped to the specific cache line based on the set index (set index) part and the tag (tag) part of the physical address of the memory. The tag (tag) field is a high bit of the physical address of the memory, and the set index (set index) field is a middle bit of the memory address. To facilitate scheduling of the write command and improve the memory access efficiency, an embodiment of this application provides another mapping manner. As shown in FIG. 17, a 32-bit physical address is used as an example. In a possible implementation, after the physical address is parsed by a memory controller, a 0^{th} bit is a data bit width (data width, DW), 1^{st} to 3^{rd} bits indicate a memory bank (bank) address, 4^{th} to 13^{th} bits indicate a column (column) address, 14^{th} to 31^{st} bits indicate a row (row) address, and the 31^{st} bit indicates a memory rank (rank) address. When a cache performs mapping on the physical address of the memory, refer to FIG. 18. The physical address is divided into a tag (tag), a set index (set index), and a block offset (block offset). 0^{th} to 5^{th} bits are the block offset (block offset), 6^{th} to 22^{nd} bits are the set index (set index), and 23^{rd} to 31^{st} bits are the tag (tag). It can be learned that, when the cache stores data or a command, a set to which the data or the command is stored is determined based on 6^{th} to 22^{nd} bits of a physical address of the data or the command, that is, 2^{nd} to 9^{th} bits of a column address and 0^{th} to 8^{th} bits of a row address. As a result, commands or data in a same row may be placed in any set (set).

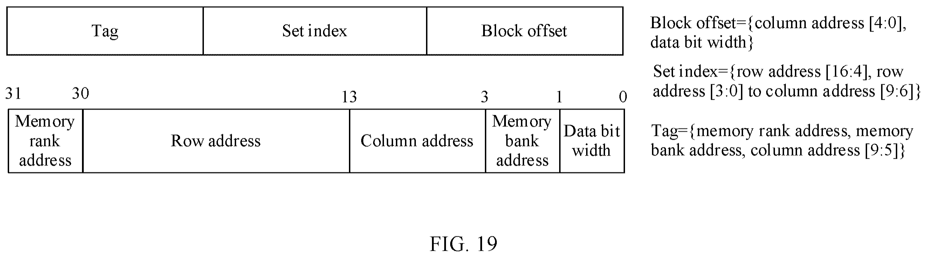

Therefore, an embodiment of this application provides a new physical address mapping manner. Refer to FIG. 19. A row address in a physical address is used as a set index (set index); a memory rank (rank) address, a memory bank (bank) address, and a high bit of a column address in the physical address are used as a tag (tag); and a low bit and a data bit width of the column address are used as a block offset (block offset). In this way, when write data of write commands with a same row address is mapped to a cache line, it can be ensured that the write data of the write commands with the same row address is placed in a same set (set). In this way, when the write commands are scheduled, dirty data whose target addresses are located in a same row can be found in a same set (set), thereby improving scheduling efficiency.

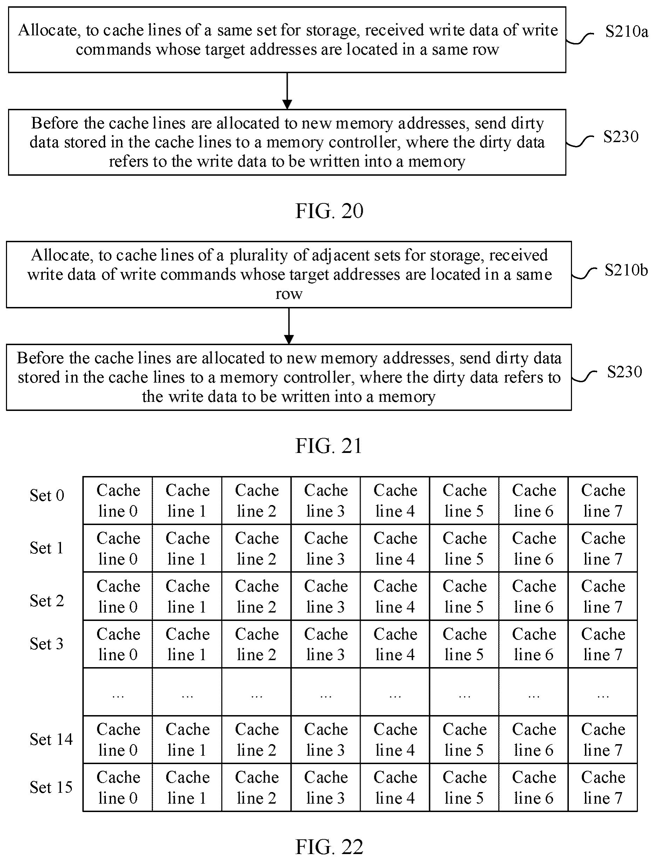

In view of this, on the basis of the foregoing example, refer to FIG. 20. S210 includes the following steps.

S210a: Allocate, to cache lines of a same set for storage, the received write data of the write commands whose target addresses are located in the same row.

For example, the row address in the physical address of the memory is used as the set index (set index); the memory rank (rank) address, the memory bank (bank) address, and the high bit of the column address in the physical address are used as the tag (tag); and the low bit and the data bit width of the column address are used as the block offset (block offset). In this way, when write data of write commands with a same row target address is mapped to cache lines, it can be ensured that the write data of the write commands with the same row target address is placed in a same set (set). In this way, when the write commands are scheduled, the write commands located in the same row may be found in the same set, or a write command adjacent to the memory address (in a same row, memory bank, or memory rank) may be found for scheduling. This can improve the scheduling efficiency.

In a possible implementation, for the cache, a quantity of cache lines (cache lines) in a set (set) is limited. For example, if one set (set) includes eight cache lines, the eight cache lines store write data of eight write commands whose addresses are located in a same row, and when a ninth write command whose address is located in the row enters the cache, write data stored in a dirty cache line in the eight cache lines is kicked out to the memory controller. In this way, a case in which the cache passively kicks out the write data to the memory controller occurs again, which is also a case that needs to be avoided.

For example, in a possible implementation, refer to FIG. 21. S210 includes the following step.

S201b: Allocate, to cache lines of a plurality of adjacent sets for storage, the received write data of the write commands whose target addresses are located in the same row.

To avoid a hazard between commands in a same row, hashing may be performed on a row address, and data or commands in the same row are distributed to several adjacent sets (sets). For example, after performing an exclusive OR operation on a low bit of the row address and a part of a column address, the data or commands in the same row are distributed to the several adjacent sets (sets). For example, the exclusive OR operation is performed on low 2 bits of the row address and high 2 bits of the column address, and the write data of the write commands located in the same row may be distributed to four adjacent sets (sets) for storage. If the exclusive OR operation is performed on low 4 bits of the row address and high 4 bits of the column address, as shown in FIG. 22, the write data of the write commands located in the same row may be distributed to 16 adjacent sets (sets) for storage. In this way, a hazard, in a same set (set), of the write data of the write commands located in the same row can be avoided.

For example, the foregoing 32-bit physical address is still used as an example. During mapping, the memory rank (rank) address, the memory bank (bank) address, 5^{th} to 9^{th} bits of the column address, and results of exclusive OR operations on 4^{th} to 16^{th} bits of the row address, 0^{th} to 3^{rd} bits of the row address, and 6^{th} to 9^{th} bits of the column address are used as the tag (tag); and 0^{th} to 4^{th} bits and the data bit width are used as the set index (set index). In this way, when the cache stores the write data, the write data of the write commands whose addresses are located in the same row may be stored in 16 adjacent sets (sets), so that efficiency of finding data or commands that are located in a same row, memory bank (bank), or memory rank (rank) can be improved. In this way, when the write commands are scheduled, the commands in the same row, memory bank (bank), or memory rank (rank) may be scheduled together, thereby reducing overheads caused by switching.

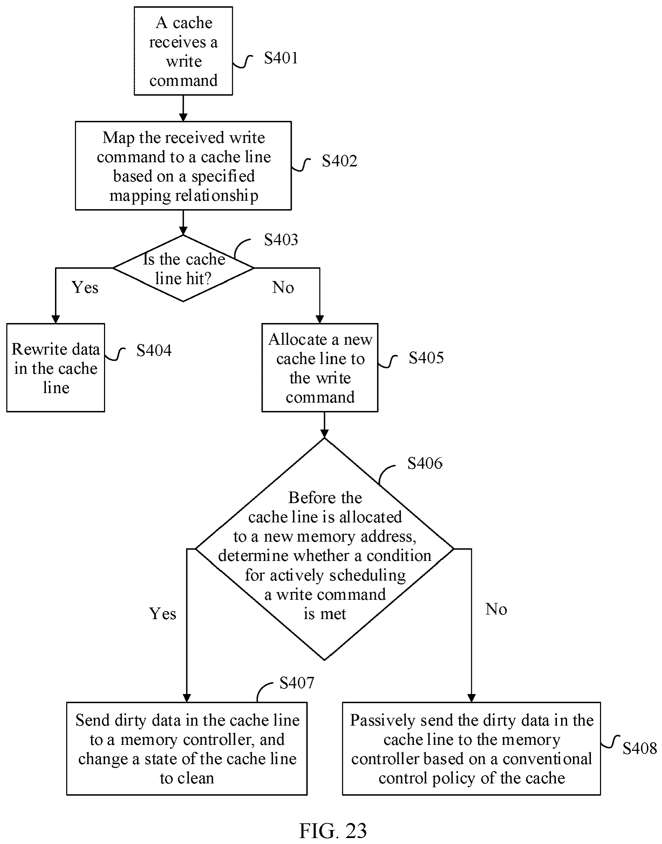

With reference to FIG. 23, the following describes a method procedure provided in an embodiment of this application by using an example in which one write command enters an LLC.

S401: A cache receives a write command.

S402: Map the received write command to a cache line based on a specified mapping relationship.

S403: Determine whether the cache line is hit.

S404: If the cache line is hit, rewrite data in the hit cache line.

For example, the write command is rewriting data in a memory cell A of a memory into 0. If the memory cell A of the memory has a corresponding cache line in the cache, when the write command enters the cache, a cache line corresponding to the memory cell A can be found based on a set index (set index), a tag (tag), and the like of an address of the memory cell A. A specific piece of data in the cache line is located based on a block index (block offset) of the address of the memory cell A, and is rewritten into 0. In other words, data writing is completed, and the rewritten data is written into the memory at a proper occasion.

S405: If the cache line is not found, allocate a new cache line to the write command.

The new cache line herein is a cache line determined based on the set index (set index), the tag (tag), or the like of the address of the write command.

S406: Before the cache line is allocated to a new memory address, determine whether a condition for actively scheduling a write command is met.

Herein, the condition for actively scheduling a write command may include: A quantity of read commands of a memory controller is less than a first specified value, or a quantity of dirty cache lines of the cache is greater than a second specified value.

S407: If the condition for actively scheduling a write command is met, send dirty data in the cache line to the memory controller, and change a state of the cache line to clean.

If the condition for actively scheduling a write command is met, write data of the write command is sent to the memory controller for execution.

S408: If the condition for actively scheduling a write command is not met, passively send the dirty data in the cache line to the memory controller based on a conventional control policy of the cache.

If the condition for actively scheduling a write command is not met, a new command or new data is allocated to the cache line based on the conventional control policy of the cache, or the write command is passively sent to the memory controller in response to a maintenance operation command of the cache.

An embodiment of this application further provides a cache. The cache is disposed between a processor and a memory, and the cache is configured to perform the control method for a cache according to the foregoing embodiments.

An embodiment of this application further provides a computer system, for example, the computer system shown in FIG. 4 or FIG. 5. The computer system includes a processor, a memory, and a cache. The processor, the memory, and the cache are connected through a bus.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium. The communication medium includes any medium that enables a computer program to be transmitted from one place to another. The storage medium may be any available medium accessible to a general-purpose or dedicated computer.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A control method for a cache, wherein the cache is connected to a memory controller, the cache comprises a plurality of cache lines, and the method comprises:
storing write data of a received write command into the cache lines; and
before the cache lines are allocated to new memory addresses, sending dirty data stored in the cache lines to the memory controller, wherein the dirty data refers to the write data to be written into a memory.

2. The control method for a cache according to claim 1, wherein before the cache lines are allocated to the new memory addresses, sending the dirty data stored in the cache lines to the memory controller comprises:
before the cache lines are allocated to the new memory addresses, when a quantity of read commands in a read queue of the memory controller is less than a first specified value, sending the dirty data stored in the cache lines to the memory controller.

3. The control method for a cache according to claim 1, wherein before the cache lines are allocated to the new memory addresses, sending the dirty data stored in the cache lines to the memory controller comprises:
before the cache lines are allocated to the new memory addresses, when a quantity of dirty cache lines reaches a second specified value, sending the dirty data stored in the cache lines to the memory controller, wherein dirty cache lines are the cache lines storing the dirty data.

4. The control method for a cache according to claim 2 or 3, wherein sending the dirty data stored in the cache lines to the memory controller comprises:
selecting, based on a memory address currently accessed by the memory controller, dirty data whose target address and the currently accessed memory address are located in a same memory rank, and sending the dirty data to the memory controller.

5. The control method for a cache according to claim 2 or 3, wherein sending the dirty data stored in the cache lines to the memory controller comprises:
selecting, based on a memory address currently accessed by the memory controller, dirty data whose target address and the currently accessed memory address are located in a same memory bank, and sending the dirty data to the memory controller.

6. The control method for a cache according to claim 2 or 3, wherein sending the dirty data stored in the cache lines to the memory controller comprises:
selecting, based on a memory address currently accessed by the memory controller, dirty data whose target address and the currently accessed memory address are located in a same row, and sending the dirty data to the memory controller.

7. The control method for a cache according to any one of claims 1 to 6, wherein before sending the dirty data stored in the cache lines to the memory controller, the method further comprises:
obtaining running status information of the memory controller, wherein the running status information comprises a quantity of read commands in the read queue of the memory controller and the memory address currently being accessed by the memory controller.

8. The control method for a cache according to any one of claims 1 to 6, wherein the cache comprises a plurality of sets, each set comprises a plurality of cache lines, and storing the write data of the received write command into the cache lines comprises:
allocating, to the cache lines of the same set for storage, received write data of the write commands whose target addresses are located in a same row.

9. The control method for a cache according to any one of claims 1 to 6, wherein the cache comprises a plurality of sets, each set comprises a plurality of cache lines, and storing the write data of the received write command into the cache lines comprises:
allocating, to the cache lines of the plurality of adjacent sets for storage, received write data of the write commands whose target addresses are located in a same row.

10. A cache, wherein the cache is configured to perform the method according to any one of claims 1 to 9.

11. A computer system, wherein the computer system comprises a processor, a memory, and the cache according to claim 10, and the processor, the memory, and the cache are connected through a bus.
